# EUROPEAN PATENT SPECIFICATION

(11) **EP 4 066 924 B1**
(45) Date of publication and mention of the grant of the patent: **07.08.2024**
(21) Application number: 21166114.5
(22) Date of filing: 30.03.2021
(51) Int. Cl.: B01D 65/02

(54) **SELF-CLEANING DECENTRALIZED WATER TREATMENT UNIT**
SELBSTREINIGENDE DEZENTRALE WASSERBEHANDLUNGSEINHEIT
UNITÉ DE TRAITEMENT DE L'EAU DÉCENTRALISÉE AUTONETTOYANTE

(43) Date of publication of application: 05.10.2022
(73) Proprietor: Bosaq BV, 9800 Deinze (BE)
(72) Inventor: Bossaer, Jacob, 9000 Gent (BE); Fiset, Erika, 9040 Sint-Amandsberg (BE); Desloover, Joachim, 9860 Oosterzele (BE); Derboven, Pieter, 9940 Evergem (BE)
(74) Representative: IP HILLS NV

(56) References cited:
- WO-A1-00/71783
- WO-A1-2017/039859
- US-A1- 2008 093 282
- US-A1- 2009 145 773

## Description

### Field of the Invention

The present invention generally relates to a decentralized water treatment unit that can chemically clean its filtration membranes without manual intervention.

### Background of the Invention

Water treatment is a process through which contaminants and undesirable components are removed or reduced, to improve the quality of water and make it suitable for human consumption. However, communities in remote rural areas or developing countries don't always have access to a centralized water treatment and distribution system. For these areas, decentralized water treatment systems offer a crucial solution to ensure access to clean water and thus human health.

These self-contained systems eliminate contaminants such as pathogens, suspended solids, and chemical pollutants from untreated water sources such as rivers, lakes, and wells. Amongst others, membrane filtration is a commonly applied technique in decentralized water treatment systems to remove waterborne contaminants by size exclusion.

However, filtration membranes become fouled and saturated over time because of various reasons such as silt loading, scale forming, organic loading, and biofilm build-up. As such, it is necessary to periodically clean the filtration membranes to maintain the flow rate of clean water.

Several such filtration membrane cleaning processes are known such as backward flush and forward flush, whereby membranes are flushed with water respectively against or with the conventional flow direction of the system at an elevated pressure. A similar process, called air flushing or air sparging, can be performed by using pressurized air to clean the system. When the aforementioned methods are insufficient to clean the filtration membrane and restore water flux, chemical cleaning is necessary.

A variety of chemicals are commonly used in chemical cleaning of filtration membranes, wherein each cleaning solution composition removes a specific form of fouling. Inorganic scale can be removed by washing the filters in a strong acidic solution, such as hydrochloric acid (HCl) or citric acid (C₆H₈O₇). On the other hand, strong bases such as sodium hydroxide (NaOH) are typically used to dissolve organic fouling. While biofilms and other organics are typically controlled by oxidant solutions such as sodium hypochlorite (NaOCI) or hydrogen peroxide (H₂O₂). However, since most of the aforementioned foulants are simultaneously present in filtration membranes it is generally necessary to use a combination of these cleaning solutions.

Such cleaning solutions may be produced on a large industrial scale, mostly in concentrated form, after which they are transported to the user to be stored in large vessels until they are needed. However, transporting and storing concentrated cleaning solutions brings potential safety hazards with it. Furthermore, this is especially not ideal for decentralized water treatment systems which are often located in remote areas where frequent handling and storage of dangerous concentrated chemicals should be avoided.

An alternative to produce the cleaning solutions involves on-site generation through electrolysis. Such method typically uses an electrolytic cell to generate a cleaning solution from a starting solution such as brine, hypochlorous acid (HClO), or sodium hypochlorite (NaOCI).

US 2008/0093282 A1 discloses a water treatment system with a function of filtering raw water, wherein a filter can be securely and efficiently sterilized without using dangerous chemicals such as hydrochloric acid and sulfuric acid. The disclosed water treatment system has a strongly acidic aqueous solution generating unit provided with an electrolytic bath for storing a solution containing an electrolyte, the electrolytic bath having a cathode chamber and an anode chamber which are partitioned by an ion-permeable membrane, a cathode and an anode disposed in the cathode chamber and the anode chamber, respectively, and a voltage applying section for applying a direct current voltage between the cathode and the anode; a strongly acidic aqueous solution feeding passage for connecting the strongly acidic aqueous solution generating unit to a raw water inlet of a reverse osmosis membrane module housing a reverse osmosis membrane to supply a strongly acidic aqueous solution generated in the strongly acidic aqueous solution generating unit into the reverse osmosis membrane module; and potentiometers for measuring an oxidation-reduction potential of the strongly acidic aqueous solution which has passed through the reverse osmosis membrane module.

A problem with electrolysis, being an energy-intensive process, is power consumption. Since decentralized water treatment systems are mostly grid-independent, powered by renewable energy sources and/or energy storage systems, it is a challenge to power the electrolytic cell.

Another challenge is to produce a variety of cleaning solutions for the different cleaning stages and varying circumstances. More specifically for decentralized water treatment systems, it is a challenge to produce this variety of cleaning solutions from a single benign starting solution, eliminating the need to transport, store or handle dangerous concentrated chemicals.

A third challenge is to limit the added volume and weight to the decentralized water treatment system, which generally increases the difficulty of transporting and installing the system in remote areas.

A fourth challenge is the self-sufficiency of the overall system. It is desirable in remote areas that the system relies as little as possible on interventions of a skilled professional after installation.

### Summary of the Invention

It is an object of the present invention, amongst others, to solve the above identified challenges and problems. It is a further object to provide a decentralized water treatment unit according to claim 1 that can chemically clean its filtration membranes without handling and/or storing dangerous concentrated chemicals.

According to a first aspect, this object is achieved by a decentralized water treatment unit for purifying untreated water to purified water for human consumption, comprising: i) a filtration module, comprising at least one filtration membrane configured to, during a filtration cycle, purify the untreated water; and ii) a cleaning module, comprising an electrolytic cell configured to, during a generation cycle, generate a cleaning solution of predetermined composition from a chloride starting solution; wherein the cleaning solution comprises an oxidant solution having an acidic pH and/or a reductant solution having a basic pH. The electrolytic cell further comprising an anode in electrical communication with a first compartment and a cathode in electrical communication with a second compartment; wherein the first and second compartment are separated by a membrane. The cleaning module further comprising a first pump configured to control a portion of the chloride starting solution flowed through the first compartment to form the oxidant solution; and/or the cleaning module further comprising a second pump configured to control a portion of the chloride starting solution flowed through the second compartment to form the reductant solution. Wherein the cleaning module is further configured to, during a cleaning cycle, pump the cleaning solution through the filtration module to clean the at least one filtration membrane.

In other words, the electrolytic cell generates a cleaning solution from a benign chloride starting solution when filtration membrane cleaning is required. By the generation, the cleaning solution is directly obtained from the chloride starting solution, i.e. no intermediate step is needed wherein a more concentrated cleaning solution needs to be diluted first. This avoids the handling and storing of dangerous concentrated chemicals, as the cleaning solution is only generated momentarily before use. The generated cleaning solution further has a predetermined composition, comprising amongst others the pH and the chlorine concentration, which may be controlled by adjusting the process parameters of the electrolysis. The predetermined composition is to be understood as that the composition of the cleaning solution is adjustable, e.g. according to the specific requirements of the filtration membrane, ensuring optimal membrane cleaning and membrane lifetime. By controlling the flow rate of the starting solution to the first and/or the second compartment, the composition of the oxidant solution and/or the reductant solution, i.e. the cleaning solution, can be controlled separately. The composition of the generated cleaning solution may further be controlled by the combination or separation of the oxidant solution and the reductant solution, according to the requirements of the filtration module. This makes the cleaning module modular, as it can produce a variety of cleaning solutions to optimally clean the different types of filtration membranes that may be used in a decentralized water treatment unit.

According to an embodiment, the cleaning module further comprises a clean-in-place vessel configured to capture the generated cleaning solution during the generation cycle and to pump the cleaning solution therefrom during the cleaning cycle. In other words, the necessary volume of cleaning solution may be gradually generated. This has the advantage that the rate at which the cleaning solution is generated, i.e. the generation rate, may be reduced to optimize the power consumption of the electrolytic cell.

According to a further embodiment, the cleaning module further comprises at least one sensor configured to measure at least one of the conductivity of the cleaning solution, the temperature of the cleaning solution, the pH of the cleaning solution, the redox potential of the cleaning solution, and the chlorine concentration of the cleaning solution.

In this case, according to a further embodiment, the cleaning module is further configured to, during the cleaning cycle, recirculate the cleaning solution back to the clean-in-place vessel and over the at least one sensor. In other words, the cleaning solution is pumped from the clean-in-place vessel, wherein it was captured during the generation cycle, through the filtration module and subsequently over the at least one sensor before being recaptured in the clean-in-place vessel.

Complementary, according to a further embodiment, the cleaning module may further comprise a control unit configured to determine, during the generation cycle, the composition of the cleaning solution and/or, during the cleaning cycle, the depletion of the cleaning solution by means of the measurements of the at least one sensor.

Depletion of the cleaning solution is to be understood as the reduction in chlorine concentration, a change in pH, and/or a change in redox potential of the cleaning solution during the cleaning cycle, relative to the composition of the cleaning solution at the start of the cleaning cycle. Determining the composition of the cleaning solution during the generation cycle has the advantage that the process parameters of the electrolysis, and thus the composition of the generated cleaning solution, may be adjusted if the composition of the generated cleaning solution is not optimal. It is a further advantage that the progress of the cleaning cycle may be tracked by monitoring the depletion of the cleaning solution. Additionally, the composition of the depleted cleaning solution, at the end of the cleaning cycle, may be determined. This has the further advantage that the discharge of chemical substances to the environment can be controlled.

The clean-in-place vessel may then further comprise a drain configured to dispose the cleaning solution when depleted. The clean-in-place vessel may further be connected to the filtration module to rinse the cleaning module and/or the filtration module with purified water. In other words, after the cleaning cycle has finished and the depleted cleaning solution has been disposed, the potential residuals in the cleaning module and/or the filtration module may be rinsed automatically by means of purified water provided by the filtration module. This has the advantage to further minimize the frequency of manual interventions of a skilled professional to rinse the cleaning module and/or the filtration module.

According to an embodiment, the cleaning module comprises a start vessel configured to hold a solid chloride salt which is substantially submerged in water to yield a saturated chloride solution; and wherein the cleaning module further comprises a salt vessel, positioned lower relative to the start vessel such that it may be automatically filled by gravity with a set volume of saturated chloride solution. The salt vessel is further connected to the filtration module to dilute the saturated chloride solution with purified water to yield the chloride starting solution having a predetermined concentration.

In other words, a first vessel, i.e. the start vessel, is filled with an excess of benign solid chloride salt that is substantially submerged in purified water, thereby forming a small volume of saturated chloride solution. This solid chloride salt may for example be sodium chloride, potassium chloride. As the solid chloride salts rarely need to be restocked, it is an advantage that the frequency of manual interventions is further minimized. Additionally, in the rare case that a restock of solid chloride salts is necessary, it does not require a skilled professional, as these substances are benign and thus can be handled safely by anyone. It is yet another advantage of starting from an excess of solid chloride salts that the volume of the vessels may be reduced. Hereafter, at the start of the generation cycle, the saturated chloride solution from the first vessel is supplied, by means of gravity, to the second vessel, i.e. the salt vessel. Before flowing the solution from the second vessel to the electrolytic cell, it is diluted to the desired concentration by the addition of purified water provided by the filtration module, i.e., there is no need for long term storage of diluted chemicals. As a more concentrated chloride starting solution is more conductive, a lower voltage may be applied across the electrodes of the electrolytic cell at the same current, i.e., at the same generation rate. It is thus an advantage of controlling the concentration of the chloride starting solution that the power consumption of the electrolytic cell may be optimized. Additionally, gravity filling the salt vessel with the saturated chloride solution avoids using an additional pump, further reducing power consumption.

According to a first embodiment, the cleaning module may be configured to bring the oxidant solution and reductant solution into contact directly after leaving the electrolytic cell to yield a mixed cleaning solution having a pH of at least about 10 to about 12 and a chlorine concentration of up to about 2000 ppm. This has the advantage that a mixed cleaning solution of predetermined composition can be generated without additional storage vessels, limiting the added volume and weight to the decentralized water treatment system.

According to a second embodiment, the cleaning module may further comprise a first three-port valve connected to the first compartment of the electrolytic cell, configured to retain the oxidant solution from coming in to contact with the reductant solution to yield an alkaline cleaning solution having a pH of at least about 10 to about 13. In other words, the oxidant solution generated in the first compartment of the electrolytic cell may be wasted or temporarily stored to neutralize the residual alkaline cleaning solution in the system, after the cleaning cycle.

According to a third embodiment, the cleaning module may further comprise a second three-port valve connected to the second compartment of the electrolytic cell, configured to retain the reductant solution from coming into contact with the oxidant solution to yield an acidic cleaning solution having a pH of at most about 3 and a chlorine concentration of up to about 3000 ppm. In other words, the reductant solution generated in the second compartment of the electrolytic cell is wasted or temporarily stored to neutralize the residual acidic cleaning solution after the cleaning cycle.

According to another embodiment, the cleaning module is further configured to be detached from the decentralized water treatment unit during the filtration cycle. In other words, the cleaning module may be attached to a fouled decentralized water treatment unit to clean the unit, after which the cleaning module may be detached. This has the advantage that the cleaning module is modular, in that it can be used to clean different decentralized water treatment units.

According to a second aspect, the invention relates to a method according to claim 12 for purifying untreated water to purified water for human consumption, by a decentralized water treatment unit according to the first aspect.

### Brief Description of the Drawings

Fig. 1 illustrates a decentralized water treatment unit for purifying untreated water to purified water for human consumption according to an embodiment of the invention;
Fig. 2 illustrates a filtration module and a cleaning module of a decentralized water treatment unit according to embodiments of the invention;
Fig. 3A and Fig. 3B illustrate an electrolytic cell comprised in the cleaning module according to embodiments of the invention;
Fig. 4A and Fig. 4B illustrate a cleaning module that is detachable from a decentralized water treatment unit according to an embodiment of the invention; and
Fig. 5 illustrates steps performed by a decentralized water treatment unit for purifying water for human consumption according to an aspect of the invention.

### Detailed Description of Embodiment(s)

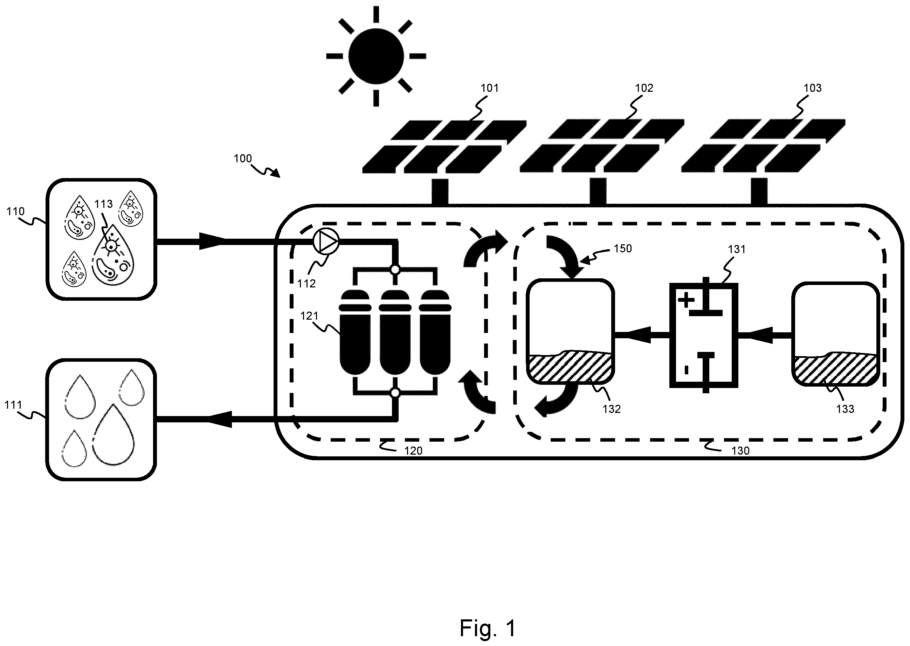

Fig. 1 illustrates a decentralized water treatment unit 100 for purifying untreated water 110 to purified water 111 for human consumption. Decentralized water treatment units are commonly located in remote areas, rural areas, or developing countries where access to both a centralized water distribution system and/or centralized energy grid are often not present. The system 100 may be grid-independent, relying on renewable energy sources such as solar panels 101, 102, 103; hydropower; and wind turbines. The system 100 may further house energy storage systems such as batteries. As such, the size and purifying capacity of decentralized water treatment units is limited compared to industrial water treatment systems.

The decentralized water treatment unit 100 comprises a filtration module 120, which has one or more filtration membranes 121. By the filtration membrane, the untreated water 110 is purified by size exclusion during a filtration cycle. By a pump 112, untreated water 110 is forced through the filtration membrane 121 whereby contaminants 113 physically larger than the membrane pores are retained. Depending on the contaminants 113 and the nature of the untreated water 110, the at least one filtration membrane 121 may for example be any of a microfiltration membrane, having a pore size of about 10 µm to about 0.01 µm; an ultrafiltration membrane, having a pore size of about 0.01 µm to about 0.001 µm; a nanofiltration membrane, having a pore size of about 0.001 µm to about 0.0001 µm; or a reverse osmosis membrane, having a pore size of at most about 0.0001 µm. The untreated water 110 may further be pumped through a plurality of filtration membranes 121 either connected in sequence, in parallel, or a combination thereof. According to an example embodiment, the filtration membranes may be six nanofiltration membranes connected in sequence and/or in parallel.

The decentralized water treatment unit 100 further comprises a cleaning module 130 for cleaning the filtration module. Module 130 comprises an electrolytic cell 131. The cell 131 generates a cleaning solution 132, during a generation cycle from a benign chloride starting solution 133. The obtained cleaning solution 132 has a predetermined composition. By the generation, the cleaning solution 132 is directly obtained from the chloride starting solution 133, i.e., no intermediate step is performed wherein a more concentrated cleaning solution needs to be diluted first. This avoids the handling and storing of dangerous concentrated chemicals, as the cleaning solution 132 is only generated momentarily before use, i.e., when cleaning is required.

The predetermined composition can be defined by its pH and the chlorine concentration. The composition may be controlled by adjusting the process parameters of the electrolysis, i.e. the electrochemical process that occurs in the electrolytic cell 131. These parameters may for example be the applied current, the applied voltage, the salt concentration of the chloride starting solution 133, and/or the flow rate of the chloride starting solution 133 supplied to the electrolytic cell 131. The predetermined composition is to be understood as that the composition of the cleaning solution 132 is adjustable, e.g. according to the specific requirements of the filtration membrane 121, ensuring optimal membrane cleaning and membrane lifetime. This predetermined composition may for example depend on the type of filtration membrane 121, the type of fouling that has saturated the at least one filtration membrane 121, the recommendations of the filtration membrane's manufacturer, and the desired lifetime of the filtration membrane 121. Additionally, it makes the cleaning module 130 modular, as it can produce a variety of cleaning solutions 132 to optimally clean the different types of filtration membranes 121 used in a decentralized water treatment unit 100.

During a cleaning cycle 150, cleaning module 130 pumps the cleaning solution 132 through the filtration module 120 to clean the at least one filtration membrane 121. By the cleaning cycle 150, the filtration capacity of the at least one filtration membrane 121 is restored to its clean level, i.e., the initial flow rate of the purified water 111 generated by the decentralized water treatment unit 100 is restored.

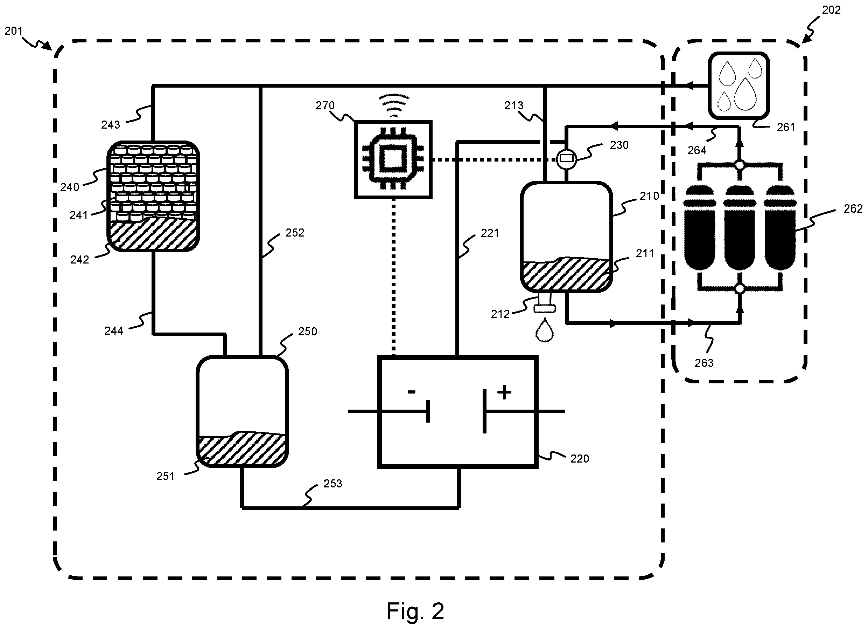

Fig. 2 illustrates further details of the cleaning module 201 according to an example embodiment. Cleaning module 201 comprises a clean-in-place vessel 210. During the generation cycle, the generated cleaning solution 211 is pumped through connection 221 and captured in vessel 210. Then, during the cleaning cycle 150, the cleaning solution 211 is pumped from this vessel 210 through connection 263 to the filtration module 202. In other words, during the generation cycle, the necessary volume of cleaning solution 211 is gradually generated by the electrolytic cell 220. This has the advantage that the rate at which the cleaning solution 211 is generated, i.e. the generation rate, may be reduced to optimize the power consumption of the electrolytic cell 220. The volume of the clean-in-place vessel 210 may further be adjusted to the required volume of cleaning solution 211 according to the type, size and amount of filtration membranes 262. According to an example embodiment, the volume of the clean-in-place vessel 210 may be at least about twice the required volume of cleaning solution 211, e.g., a clean-in-place vessel 210 of 100 litres when 40 litres of cleaning solution 211 is required. When the required volume of the cleaning solution 211 is generated, the cleaning cycle 150 may start by pumping the cleaning solution 211 in a recirculation mode from the clean-in-place vessel 210 through the filtration module 202 to clean the at least one filtration membrane 262.

According to a further embodiment, the cleaning module 201 further comprises one or more sensors 230. The sensors 230 are positioned between the electrolytic cell 220 and the clean-in-place vessel 210. As such, the generated cleaning solution 211 is measured by the sensors 230 when pumped through connection 221 to vessel 210 during the generation cycle. The sensors 230 may for example measure the conductivity of the cleaning solution 211; the temperature of the cleaning solution 211; the pH of the cleaning solution 211; the redox potential of the cleaning solution 211; and/or the chlorine concentration of the cleaning solution 211.

During the cleaning cycle 150, the cleaning module then recirculates the cleaning solution 211 back to the clean-in-place vessel 210 and over the sensor 230. In other words, the cleaning solution 211 is pumped from the clean-in-place vessel 210, wherein it was captured during the generation cycle, through connection 263 to the filtration module 202. After passing through the filtration membrane 262, the cleaning solution 211 is pumped back to the cleaning module 201 through connection 264, over the sensor 230 before being recaptured in the clean-in-place vessel 210.

The cleaning module 201 may further comprise a control unit 270 configured to determine, during the generation cycle, the composition of the cleaning solution 211 and/or, during the cleaning cycle 150, the depletion of the cleaning solution 211 by means of the measurements of the one or more sensors 230.

Depletion of the cleaning solution 211 is to be understood as the reduction in chlorine concentration, a change in pH, and/or a change in redox potential of the cleaning solution 211 during the cleaning cycle 150, relative to the composition of the cleaning solution 211 at the start of the cleaning cycle 150. Determining the composition of the cleaning solution 211 during the generation cycle has the advantage that the process parameters of the electrolysis, and thus the composition of the generated cleaning solution 211, may be adjusted if the composition of the generated cleaning solution 211 is not optimal. It is a further advantage that the progress of the cleaning cycle may be tracked by monitoring the depletion of the cleaning solution 211. Additionally, the composition of the depleted cleaning solution 211, at the end of the cleaning cycle 150, may be determined. This has the further advantage that the discharge of chemical substances to the environment can be controlled.

The control unit 270 may be a programmable logic controller (PLC), able to communicate wirelessly with a remote server, configured to provide a user with remote access to the measurements of the at least on sensor 230. Additionally, the remote user may further configure the control unit 270 to adjust the process parameters of the electrolysis, and thus the composition of the generated cleaning solution 211. In another example embodiment, the control unit may be comprised in the filtration module 202, further configured to control the filtration process, i.e., the purification of untreated water 110 to purified water 111 for human consumption.

The clean-in-place vessel 210 may further comprise a drain 212 configured to dispose the cleaning solution 211 when depleted. In other words, the cleaning cycle 150 ends by recapturing the depleted cleaning solution 211 in the clean-in-place vessel 210 and discharging the depleted cleaning solution 211 therefrom through the drain 212. Since the composition of the depleted cleaning solution 211 may be determined by means of the at least one sensor and the control unit 270, the discharge of chemical substances to the environment can be controlled.

Additionally, the clean-in-place vessel 210 may further be connected, by means of connection 213, to the filtration module 202 to rinse the cleaning module 201 and the filtration module 202 with purified water 261. In other words, after the cleaning cycle 150 has finished and the depleted cleaning solution 211 has been disposed, the potential residuals in the cleaning module 201 and/or the filtration module 202 may be rinsed automatically by means of purified water 261 provided by the filtration module 202. Because of this the frequency of manual interventions by a skilled professional to rinse the cleaning module 201 and/or the filtration module 202 can be reduced.

Cleaning module 201 further comprises a start vessel 240 and a salt vessel 250. The start vessel 240 is filled with an excess of benign solid chloride salt 241 that is substantially submerged in purified water 261 provided by the filtration module 202, thereby yielding a small volume of saturated chloride solution 242. The volume of the start vessel 240 may further be adjusted to the required volume of cleaning solution 211, according to the type, size and amount of filtration membranes 262. According to an example embodiment, the volume of the start vessel 240 may be about the required volume of cleaning solution 211; e.g. a start vessel 240 of 50 litres when 40 litres of cleaning solution 211 is required. The start vessel 240 is further automatically filled with purified water 261, provided by the filtration module 202 through connection 243. The solid chloride salt 241 may for example be sodium chloride, potassium chloride. According to an example embodiment, the solid chloride salt may be solid sodium chloride with a purity of at least about 99%.

As the solid chloride salt 240 rarely need to be restocked, it is an advantage that the frequency of manual interventions is further minimized. Additionally, in the rare case that a restock of solid chloride salt 240 is necessary, it does not require a skilled professional, as these substances are benign and thus can be handled safely by anyone. It is yet another advantage of starting from an excess of solid chloride salt 240 that the volume of the vessels may be reduced, compared to storing a concentrated starting solution that needs to be diluted before cleaning.

At the start of the generation cycle, a set volume of saturated chloride solution 242 from the start vessel 240 is supplied automatically, by means of gravity, to the salt vessel 250 through connection 244, i.e. the salt vessel 250. The volume of the salt vessel 250 may further be adjusted to the required volume of cleaning solution 211, according to the type, size and amount of filtration membranes 262. According to an example embodiment, the volume of the salt vessel 250 may be at least about twice the required volume of cleaning solution 211; e.g. a salt vessel 250 of 100 litres when 40 litres of cleaning solution 211 is required. Before flowing the solution from the salt vessel 250 to the electrolytic cell 220 through connection 253, it is diluted to the desired concentration by the addition of purified water 261 provided by the filtration module 202 through connection 252, i.e. there is no long term storage of diluted chemicals. The desired salt concentration may for example be adjusted according to the applied current to the electrolytic cell 220; the desired concentration of the generated cleaning solution 211; the maximum power consumption of the electrolytic cell 220; and/or the configuration of the electrolytic cell 220. According to an example embodiment, the chloride starting solution 251 may be a sodium chloride solution with a concentration of up to about 40 g/L total dissolved salts (TDS).

As a more concentrated chloride starting solution 251 is more conductive, a lower voltage may be applied across the electrodes of the electrolytic cell 220 at the same applied current, i.e. at the same generation rate. It is thus an advantage of controlling the concentration of the chloride starting solution 251 that the power consumption of the electrolytic cell 220 may be optimized. Additionally, gravity filling the salt vessel 250 with the saturated chloride solution 242 avoids using an additional pump, further reducing power consumption.

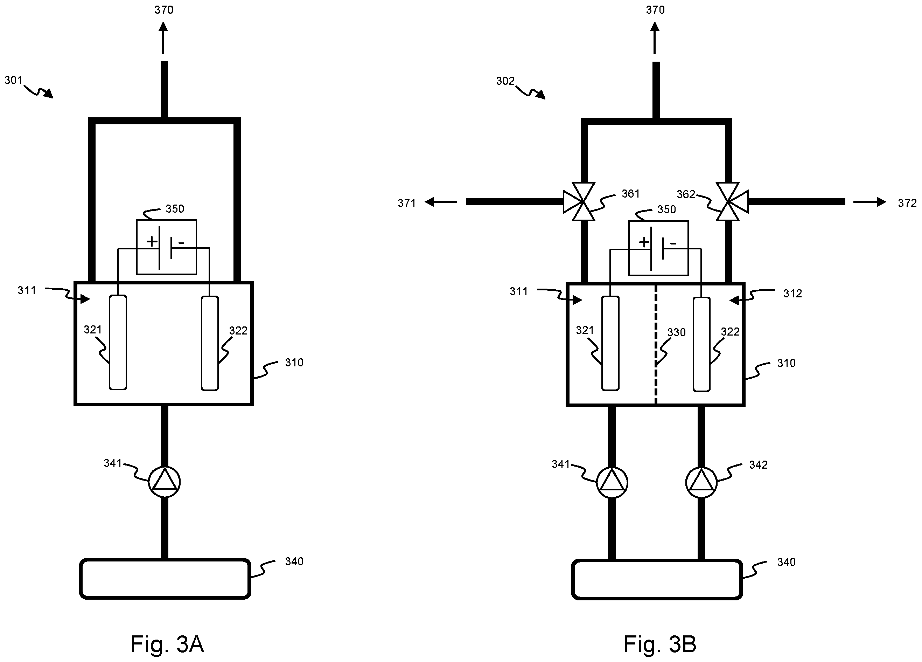

Fig. 3A illustrates an electrolytic cell 310 according to an embodiment 301 of the invention. Electrolytic cell 310 has a compartment 311 into which the chloride starting solution 251 is pumped, by means of a first pump 341, from the salt vessel 340. The electrolytic cell 310 further comprises an anode 321, connected to a positive terminal of a power source 350; and a cathode 322, connected to a negative terminal of a power source 350; both in electrical communication with the compartment 311. For example, the power source 350 may be a DC power source operating in current-control mode, i.e. supplying a set constant current. The applied current largely controls the generation rate of the cleaning solution 211, as it sets the speed of the oxidation reactions and the reduction reactions occurring at the electrodes 321,322. According to an example embodiment, the electrode surface area is at least about 0.01m² up to about 0.02m² and the applied current density is at least about 250 A/m² up to about 2000 A/m².

The oxidants generated at the anode 321 depend on the applied current to the electrolytic cell 310, the anode material, and the composition of the chloride starting solution 251. The anode material may be made of a mixed metal oxide and the chloride starting solution 251 is a sodium chloride solution with a concentration of up to about 40 g/L total dissolved salts (TDS). In this case, two competing oxidation reactions can occur at the anode 321:

*2 Cl⁻* → *Cl₂* + *2e⁻*

*2H₂O* → O₂ *+ 4e⁻ + 4H⁺*

The generation of chlorine (Cl₂) is desired over the generation of oxygen (O₂) and may be obtained by adjusting the concentration of the chloride starting solution 251, the applied current to the electrolytic cell 310, the anode material, and the flow rate of the chloride starting solution 251 to the electrolytic cell 310. It is thus a further advantage that all these parameters, necessary to predominantly obtain chlorine (Cl₂), can be controlled.

The chlorine (Cl₂), generated inside the compartment 311, will instantly react with the present water to form either hypochlorous acid (HOCl) and hydrogen chloride (HCl), or hypochlorite (ClO⁻) and hydrogen chloride (HCl), depending on the pH of the solution. For example, the predominant form of chlorine may be Cl*₂* when the pH is at most 4; HOCl when the pH is 4 up to 7; and ClO⁻ when pH is at least 7.

*Cl₂* + *H₂O* → *HOCl* + *HCl*

The reductants generated at the cathode 322 depend on the applied current to the electrolytic cell 310, the cathode material, and the composition of the chloride starting solution 251. The cathode material may be made of stainless steel and the chloride starting solution 251 may be a sodium chloride solution with a concentration of up to about 40 g/L total dissolved salts (TDS). In this case, one reduction reaction occurs at the cathode 322:

2*H*₂*O* + *2e⁻* → *H*₂ + 2*OH⁻*

Additionally, to the reactions at the electrodes 321,322, the free sodium ions (Na⁺) in the compartment 311 will react with the generated hydroxide ions (OH⁻) to form sodium hydroxide (NaOH) according to:

2*Na⁺* + 2*OH⁻* → 2*NaOH*

Finally, the generated sodium hydroxide (NaOH) will react with the hypochlorous acid (HOCl) and hydrogen chloride (HCl), forming sodium hypochlorite (NaOCl) according to:

*HOCl* + *HCl* + 2*NaOH* → *NaOCl* + *NaCl* + 2*H*₂*O*

As such, the electrolytic cell 310 generates a cleaning solution 370 containing sodium hypochlorite (NaOCl), having a pH of at least about 7 to about 10 and a chlorine concentration of up to about 2000 ppm.

Fig. 3B illustrates an electrolytic cell 310 according to another embodiment 302, comprising a first compartment 311 and a second compartment 312 separated by a membrane 330. The membrane 330 may for example be a semipermeable membrane such as a cation-exchange membrane, an anion-exchange membrane, or a bipolar-exchange membrane, that allows the migration of specific ions between the first compartment 311 and the second compartment 312. According to an example embodiment, the membrane 330 is a cation-exchange membrane that allows the migration of sodium cations (Na⁺) from the first compartment 311 to the second compartment 312. An advantage of ion-exchange membranes is that they offer a strict control on the exchanged ions, but at an increased cost. Alternatively, the membrane 330 may for example be a permeable membrane such as a separator, which physically separates some of the constituents in the first compartment 311 from those in the second compartment 312 according to their size. An advantage of separators is that they are cheaper and require less maintenance compared to ion-exchange membranes but offer a decreased control on the exchanged constituents.

The electrolytic cell 310 further comprises an anode 321, connected to a positive terminal of a power source 350; and a cathode 322, connected to a negative terminal of a power source 350. The anode 321 is in electrical communication with the first compartment 311 and the cathode 312 in electrical communication with the second compartment 312. A portion of the chloride starting solution 251 is pumped from the salt vessel 340 through the first compartment 311 to form an oxidant solution having an acidic pH and a portion of the starting solution is pumped from the salt vessel 340 through the second compartment to form a reductant solution having a basic pH.

Notwithstanding the presence of the membrane 330, the oxidation reaction at the anode 321 in the first compartment 311, generating chlorine (Cl₂) and oxygen (O₂), and the reduction reaction at the cathode 322 in the second compartment 312, generating hydroxide ions (OH⁻) and hydrogen (H₂), remain as previously described. In the first compartment 311, the generated chlorine (Cl₂) will instantly react with the present water to form the oxidant solution comprising either hypochlorous acid (HOCl) and hydrogen chloride (HCl), or hypochlorite (ClO⁻) and hydrogen chloride (HCl), depending on the pH of the oxidant solution. In the second compartment 312, the free sodium ions (Na⁺) will react with the generated hydroxide ions (OH⁻) to form the reductant solution comprising sodium hydroxide (NaOH).

According to an embodiment, the cleaning module 201 comprises a single pump configured to control the portion of chloride starting solution 251 pumped from the salt vessel 340 to both compartments 311,312 of the electrolytic cell 310. In other words, the portion of chloride starting solution 251 pumped to the first compartment 311 and second compartment 312 is substantially equal. This avoids using an additional pump, which has the advantage that it reduces power consumption.

According to another embodiment, the cleaning module 201 comprises a first pump 341 and a second pump 342 configured to control the portion of the chloride starting solution 251 flowed through respectively the first compartment 311 to form the oxidant solution and the second compartment 312 to form the reductant solution. In other words, the flow rate of the chloride starting solution 251 to each of the first 311 and the second compartment 312 can be controlled separately. This has the advantage that the chlorine concentration of the oxidant solution, generated at the anode 321, and the sodium hydroxide concentration of the reductant solution, generated at the cathode 322, can be controlled separately. According to an example embodiment, the flow rate of the chloride starting solution 251 to the first compartment 311 is at least about 5 litres/hour up to about 60 litres/hour; and the flow rate of the chloride starting solution 251 to the second compartment 312 is at least about 5 litres/hour up to about 60 litres/hour. The composition of the generated cleaning solution 211, comprising amongst others the pH, the chlorine concentration, and/or the sodium hydroxide concentration; may then be controlled by the combination or separation of the oxidant solution and the reductant solution, according to the requirements of the filtration module 202.

According to a first embodiment, the cleaning module 201 may be configured to bring the oxidant solution and reductant solution into contact directly after leaving the electrolytic cell 310 to yield a mixed cleaning solution 370 having a pH of at least about 10 to about 12 and a chlorine concentration of up to about 2000 ppm. In other words, controlling the composition of the oxidant and reductant solution separately and thereafter combining them, allows to adjust the pH and chlorine concentration of the mixed cleaning solution 370 according to the requirements of the filtration module 201. Additionally, this range of mixed cleaning solution 370 compositions can be achieved by starting from the same chloride starting solution 251. This has the advantage that a mixed cleaning solution 370 of predetermined composition can be generated without additional storage vessels, limiting the added volume and weight to the decentralized water treatment unit.

According to a second embodiment, the cleaning module 201 comprises a first three-port valve 361 connected to the first compartment 311 of the electrolytic cell 310, configured to retain the oxidant solution from coming in to contact with the reductant solution to yield an alkaline cleaning solution 372 having a pH of at least about 10 to about 13. In other words, the oxidant solution generated in the first compartment 311 of the electrolytic cell 310 may be wasted or temporarily stored to neutralize the residual alkaline cleaning solution 372 in the system, after the cleaning cycle.

According to a third embodiment, the cleaning module 201 comprises a second three-port valve 362 connected to the second compartment 312 of the electrolytic cell 310, configured to retain the reductant solution from coming in contact with the oxidant solution to yield an acidic cleaning solution 371 having a pH of at most about 3 and a chlorine concentration of up to about 3000 ppm. In other words, the reductant solution generated in the second compartment 312 of the electrolytic cell 310 is wasted or temporarily stored to neutralize the residual acidic cleaning solution 371 after the cleaning cycle.

It is to be understood that the cleaning module may comprise only the first three-port valve 361, only the second three-port valve 362, or both. Additionally, both the first 361 and second three-port valve 362 may be any type of connection device configured to provide general converging or diverging of fluid flows.

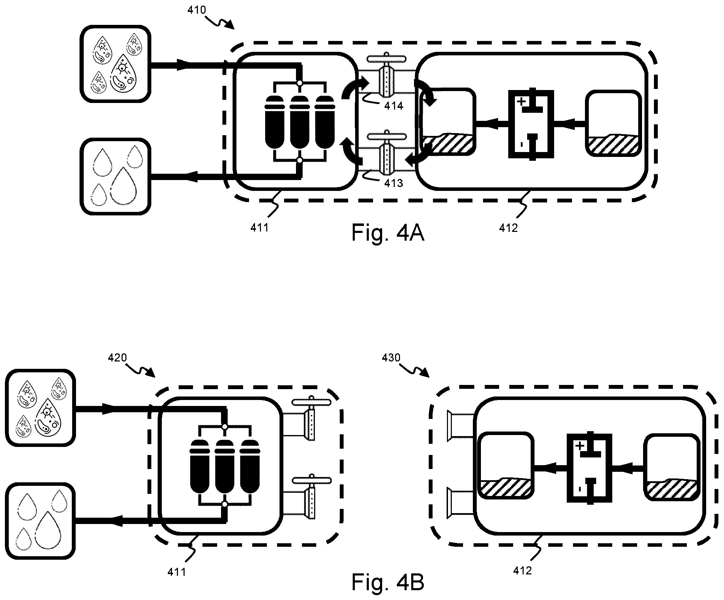

Fig. 4A and Fig. 4B illustrate a decentralized water treatment unit 410,420 according to an embodiment, wherein the cleaning module 412 is configured to be detached from the filtration module 411 during the filtration cycle, i.e., when no cleaning is required. Fig. 4A illustrates a decentralized water treatment unit 410 wherein the cleaning module 412 is attached to a fouled filtration module 411 that requires cleaning. The modules 411,412 comprise at least two connections configured to clean the at least one filtration membrane in a recirculation mode: a first connection 413 configured to pump the cleaning solution from the cleaning module 412 to the filtration module 411; and a second connection 414 configured to return the cleaning solution from the filtration module 411 to the cleaning module 412, after passing through the at least one filtration membrane. Advantageously, the modules 411,412 may further comprise a third connection configured to supply the cleaning module 412 with purified water provided by the filtration module 411.

Fig. 4B illustrates a decentralized water treatment unit 420 wherein the cleaning module 412 is detached from the filtration module 411, thereby the cleaning module is no longer comprised in the decentralized water treatment unit 420. The detached cleaning module 430 may then be freely transported, for example to be attached to another decentralized water treatment unit that requires cleaning. This has the advantage that the cleaning module is modular, in that it can be used to clean several decentralized water treatment units.

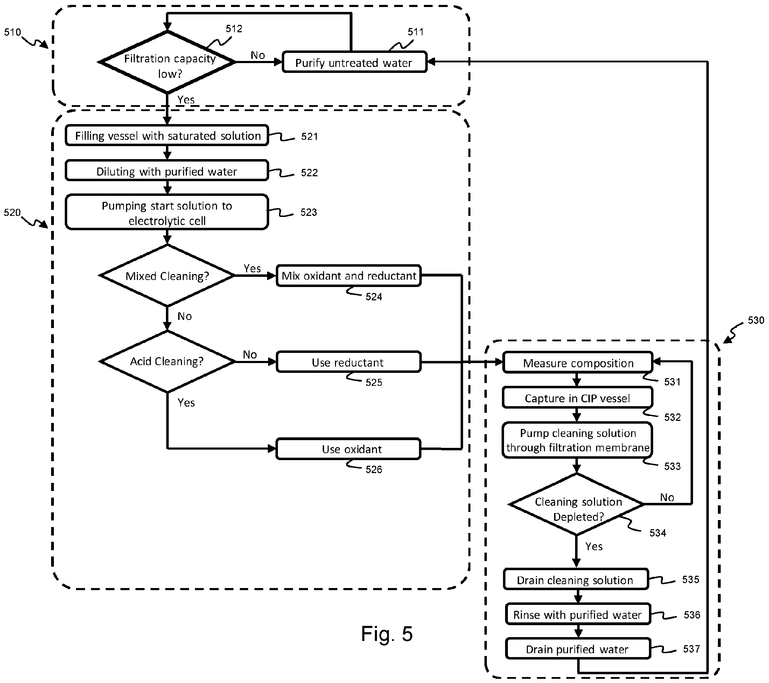

Fig. 5 illustrates the steps of a method for purifying untreated water to purified water for human consumption, by means of a decentralized water treatment unit 100 according to an embodiment of the first aspect. The method comprises purifying the untreated water 511, during the filtration cycle 510, by pumping the untreated water through the at least one filtration membrane comprised in the filtration module. Purifying the untreated water 511 continues until the filtration capacity of the filtration membranes crosses a threshold value 512. For example, the threshold value may be a lower limit in the flow rate of purified water, generated by the filtration module; and/or an upper limit in the pumping pressure of the untreated water through the filtration module.

When filtration capacity crosses the threshold value, the generation cycle 520 is initiated. The first step 521 comprising filling the salt tank 250 by gravity with the saturated chloride solution 242, yielded by substantially submerging solid chloride salt 241 in purified water 261 within the start vessel 240. The second step 422 is diluting the saturated chloride solution 242 to yield the chloride starting solution 251 having the predetermined concentration, by adding purified water 261 provided by the filtration module 202. The third step 523 comprises pumping, by means of a first 341 and a second pump 342, a portion of the chloride starting solution 251 to the first compartment 311 of the electrolytic cell 220,310 to form the oxidant solution having an acidic pH; and pumping a portion of the chloride starting solution 251 to the second compartment 312 of the electrolytic cell 220,310 to form the reductant solution having a basic pH.

The composition of the generated cleaning solution 211, comprising amongst others the pH, the chlorine concentration, and the sodium hydroxide concentration; may then be controlled by the combination or separation of the oxidant solution and the reductant solution according to the requirements of the filtration module. If mixed cleaning is required, the oxidant solution and reductant solution are mixed in step 524 to yield a mixed cleaning solution 370 having a pH of at least about 10 to about 12 and a chlorine concentration of up to about 2000 ppm. If alkaline cleaning is required, the oxidant solution is retained from coming in contact with the reductant solution in step 525, by means of the first three-port-valve 361, to yield an alkaline cleaning solution 372 having a pH of at least about 10 to about 13. If acid cleaning is required, the reductant solution is retained from coming in contact with the oxidant solution in step 526, by means of the second three-port-valve 362, to yield an acidic cleaning solution 371 having a pH of at most about 3 and a chlorine concentration of up to about 3000 ppm. According to an embodiment, both the retained oxidant solution and the retained reductant solution may further be used to neutralize the residual cleaning solution after the cleaning cycle. This may for example be achieved by capturing the retained solution in an additional vessel, wherefrom it may be pumped to neutralize the residual cleaning solution 211 after the cleaning cycle. According to another example, the cleaning solution 211 may be drained from the clean-in-place vessel 210 to an additional vessel after the cleaning cycle, wherein the retained solution was captured, thereby neutralizing the cleaning solution prior to discharging it to the environment.

The generated cleaning solution 370,371,372 is then pumped over at least one sensor, measuring 531 at least one of the conductivity of the cleaning solution, the temperature of the cleaning solution, the pH of the cleaning solution, the redox potential of the cleaning solution, and the chlorine concentration of the cleaning solution. Thereafter, capturing 532 the cleaning solution 370,371,372 in the clean-in-place vessel 210 until the necessary volume of cleaning solution is generated.

Once this predetermined volume of cleaning solution is available in the clean-in-place vessel 210, the cleaning cycle 530 may start by pumping 533 the cleaning solution through the filtration module 202 for cleaning the at least one filtration membrane 262. The cleaning solution is then further recirculated from the clean-in-place-vessel, through the filtration module and subsequently over the at least one sensor before being recaptured in the clean-in-place vessel, thereby continuously repeating steps 531, 532, and 533.

During this recirculation mode, the control unit tracks the progress of the cleaning cycle by monitoring 534 the depletion of the cleaning solution. Once depleted, the cleaning solution is recaptured in the clean-in-place vessel and drained 535 therefrom through the drain 212. Hereafter, according to an embodiment, both the retained oxidant solution and/or the retained reductant solution may be used to neutralize the residual cleaning solution by pumping the retained solution through the modules as in steps 531, 532, and 533. Once neutralized, the residual cleaning solution is recaptured in the clean-in-place vessel and drained therefrom through the drain 212. According to another example embodiment, the depleted cleaning solution may be neutralized by pumping it to an additional vessel, wherein the retained solution was stored, prior to discharging it to the environment.

Hereafter, rinsing 536 of the cleaning module and/or the filtration module is performed with purified water. This may be done by filling the clean-in-place vessel with a volume of purified water, by means of the connection to the filtration module, followed by pumping the purified water through the modules as in steps 531, 532, and 533. Once rinsed, the water is recaptured in the clean-in-place vessel and drained 537 therefrom through the drain 212. The decentralized water treatment unit then returns to purifying 511 untreated water to purified water for human consumption, i.e. the filtration cycle 510.

Although the present disclosure has been illustrated by reference to specific embodiments, it will be apparent to those skilled in the art that the invention is not limited to the details of the foregoing illustrative embodiments. The invention is limited by the appended claims. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A decentralized water treatment unit (100) for purifying untreated water (110) to purified water (111) for human consumption, the unit comprising:
- a filtration module (120), comprising at least one filtration membrane (121) configured to, during a filtration cycle, purify the untreated water;
- a cleaning module (130), comprising an electrolytic cell (131) configured to, during a generation cycle, generate a cleaning solution (132) of predetermined composition from a chloride starting solution (133); wherein the cleaning solution comprises an oxidant solution having an acidic pH and/or a reductant solution having a basic pH;
- the electrolytic cell (310) further comprising an anode (321) in electrical communication with a first (311) compartment and a cathode (322) in electrical communication with a second (312) compartment; wherein the first and second compartment are separated by a membrane (330); and
- the cleaning module further comprising a first pump (341) configured to control a portion of the chloride starting solution flowed through the first compartment (311) to form the oxidant solution; and/or the cleaning module further comprising a second pump (342) configured to control a portion of the chloride starting solution flowed through the second compartment (312) to form the reductant solution;
wherein the cleaning module (130) is further configured to, during a cleaning cycle (150), pump the cleaning solution (132) through the filtration module (120) to clean the at least one filtration membrane (121).

2. The decentralized water treatment unit according to claim 1, wherein the cleaning module (201) further comprises a clean-in-place vessel (210) configured to capture the generated cleaning solution (211) during the generation cycle and to pump the cleaning solution therefrom during the cleaning cycle.

3. The decentralized water treatment unit according to claim 1 or 2, wherein the cleaning module (201) further comprises at least one sensor (230) configured to measure at least one of the conductivity of the cleaning solution, the temperature of the cleaning solution, the pH of the cleaning solution, the redox potential of the cleaning solution, and the chlorine concentration of the cleaning solution.

4. The decentralized water treatment unit according to claim 2 and 3, wherein the cleaning module (201) is further configured, during the cleaning cycle, to recirculate the cleaning solution (211) back to the clean-in-place vessel (210) and over the at least one sensor (230).

5. The decentralized water treatment unit according to claim 4, wherein the cleaning module (201) further comprises a control unit (270) configured to determine, during the generation cycle, the composition of the cleaning solution (211) and/or, during the cleaning cycle, the depletion of the cleaning solution (211) by means of the measurements of the at least one sensor (230).

6. The decentralized water treatment unit according to claim 5, wherein the clean-in-place vessel (210) further comprises a drain (212) configured to dispose the cleaning solution (211) when depleted; and/or wherein the clean-in-place vessel (210) is further connected to the filtration module (202) to rinse the cleaning module (201) and/or the filtration module (202) with purified water (261).

7. The decentralized water treatment unit according to any of the preceding claims, wherein the cleaning module (201) further comprises a start vessel (240) configured to hold a solid chloride salt (241) which is substantially submerged in water to yield a saturated chloride solution (242); and wherein the cleaning module (201) further comprises a salt vessel (250), positioned lower relative to the start vessel (240) such that it may be automatically filled by gravity with a set volume of saturated chloride solution (242). The salt vessel (250) further being connected to the filtration module (202) to dilute the saturated chloride solution (242) with purified water to yield the chloride starting solution (251) having a predetermined concentration.

8. The decentralized water treatment unit according to any of the preceding claims, further comprising a first three-port valve (361) connected to the first compartment (311) of the electrolytic cell (310), configured to retain the oxidant solution from coming in contact with the reductant solution to yield an alkaline cleaning solution (372) having a pH of at least about 10 to about 13.

9. The decentralized water treatment unit according to any of the preceding claims, further comprising a second three-port valve (362) connected to the second compartment (312) of the electrolytic cell (310), configured to retain the reductant solution from coming in contact with the oxidant solution to yield an acidic cleaning solution (371) having a pH of at most about 3 and a chlorine concentration of up to about 3000 ppm.

10. The decentralized water treatment unit according to any of the preceding claims, wherein the cleaning module is configured to bring the oxidant solution and reductant solution into contact directly after leaving the electrolytic cell (310) to yield a mixed cleaning solution (370) having a pH of at least about 10 to about 12 and a chlorine concentration of up to about 2000 ppm.

11. The decentralized water treatment unit according to any of the preceding claims, wherein the cleaning module (411) is further configured to be detached from the decentralized water treatment unit (420) during the filtration cycle.

12. A method for purifying untreated water to purified water for human consumption, by a decentralized water treatment unit according to any of the claims 1-11, the method comprising:
- during a filtration cycle (510), purifying the untreated water by means of a filtration module, comprising at least one filtration membrane; and
- during a generation cycle (520), generating a cleaning solution of predetermined composition from a chloride starting solution, by means of a cleaning module comprising an electrolytic cell; and
- during a cleaning cycle (530), pumping the cleaning solution, by means of the cleaning module, through the filtration module for cleaning the at least one filtration membrane.

## Patentansprüche

1. Dezentrale Wasserbehandlungseinheit (100) zum Aufbereiten von unbehandeltem Wasser (110) in aufbereitetes Wasser (111) für den menschlichen Verbrauch, wobei die Einheit Folgendes umfasst:
- ein Filtrationsmodul (120), das mindestens eine Filtrationsmembran (121) umfasst, die dazu konfiguriert ist, während eines Filtrationszyklus das unbehandelte Wasser aufzubereiten;
- ein Reinigungsmodul (130), das eine elektrolytische Zelle (131) umfasst, die dazu konfiguriert ist, während eines Erzeugungszyklus eine Reinigungslösung (132) mit vorbestimmter Zusammensetzung aus einer Chlorid-Ausgangslösung (133) zu erzeugen; wobei die Reinigungslösung eine Oxidationsmittellösung mit einem sauren pH-Wert und/oder eine Reduktionsmittellösung mit einem basischen pH-Wert umfasst;
- wobei die elektrolytische Zelle (310) ferner eine Anode (321) in elektrischer Verbindung mit einer ersten (311) Kammer und eine Kathode (322) in elektrischer Verbindung mit einer zweiten (312) Kammer umfasst; wobei die erste und die zweite Kammer durch eine Membran (330) getrennt sind; und
- wobei das Reinigungsmodul ferner eine erste Pumpe (341) umfasst, die dazu konfiguriert ist, einen Teil der Chlorid-Ausgangslösung, der durch die erste Kammer (311) geleitet wird, so zu steuern, dass sie die Oxidationsmittellösung bildet; und/oder wobei das Reinigungsmodul ferner eine zweite Pumpe (342) umfasst, die dazu konfiguriert ist, einen Teil der Chlorid-Ausgangslösung, der durch die zweite Kammer (312) geleitet wird, so zu steuern, dass sie die Reduktionsmittellösung bildet;
wobei das Reinigungsmodul (130) ferner dazu konfiguriert ist, während eines Reinigungszyklus (150) die Reinigungslösung (132) durch das Filtrationsmodul (120) zu pumpen, um die mindestens eine Filtrationsmembran (121) zu reinigen.

2. Dezentrale Wasserbehandlungseinheit nach Anspruch 1, wobei das Reinigungsmodul (201) ferner ein Vor-Ort-Reinigungsgefäß (210) umfasst, das dazu konfiguriert ist, die erzeugte Reinigungslösung (211) während des Erzeugungszyklus aufzufangen und die Reinigungslösung während des Reinigungszyklus daraus abzupumpen.

3. Dezentrale Wasserbehandlungseinheit nach Anspruch 1 oder 2, wobei das Reinigungsmodul (201) ferner mindestens einen Sensor (230) umfasst, der dazu konfiguriert ist, mindestens eines von der Leitfähigkeit der Reinigungslösung, der Temperatur der Reinigungslösung, dem pH-Wert der Reinigungslösung, dem Redoxpotential der Reinigungslösung und der Chlorkonzentration der Reinigungslösung zu messen.

4. Dezentrale Wasserbehandlungseinheit nach Anspruch 2 und 3, wobei das Reinigungsmodul (201) ferner dazu konfiguriert ist, während des Reinigungszyklus die Reinigungslösung (211) zurück zu dem Vor-Ort-Reinigungsgefäß (210) und über den mindestens einen Sensor (230) zurückzuführen.

5. Dezentrale Wasserbehandlungseinheit nach Anspruch 4, wobei das Reinigungsmodul (201) ferner eine Steuereinheit (270) umfasst, die dazu konfiguriert ist, während des Erzeugungszyklus die Zusammensetzung der Reinigungslösung (211) und/oder während des Reinigungszyklus die Erschöpfung der Reinigungslösung (211) anhand der Messungen des mindestens einen Sensors (230) zu bestimmen.

6. Dezentrale Wasserbehandlungseinheit nach Anspruch 5, wobei das Vor-Ort-Reinigungsgefäß (210) ferner einen Abfluss (212) umfasst, der dazu konfiguriert ist, die Reinigungslösung (211) zu entsorgen, wenn sie erschöpft ist; und/oder wobei das Vor-Ort-Reinigungsgefäß (210) ferner mit dem Filtrationsmodul (202) verbunden ist, um das Reinigungsmodul (201) und/oder das Filtrationsmodul (202) mit aufbereitetem Wasser (261) zu spülen.

7. Dezentrale Wasserbehandlungseinheit nach einem der vorhergehenden Ansprüche, wobei das Reinigungsmodul (201) ferner ein Ausgangsgefäß (240) umfasst, das dazu konfiguriert ist, ein festes Chloridsalz (241) zu enthalten, das im Wesentlichen in Wasser untergetaucht ist, um eine gesättigte Chloridlösung (242) zu erhalten; und wobei das Reinigungsmodul (201) ferner ein Salzgefäß (250) umfasst, das relativ zu dem Ausgangsgefäß (240) tiefer positioniert ist, so dass es automatisch durch Schwerkraft mit einem festgelegten Volumen einer gesättigten Chloridlösung (242) gefüllt werden kann, wobei das Salzgefäß (250) ferner mit dem Filtrationsmodul (202) verbunden ist, um die gesättigte Chloridlösung (242) mit aufbereitetem Wasser zu verdünnen, um die Chlorid-Ausgangslösung (251) mit einer vorbestimmten Konzentration zu erhalten.

8. Dezentrale Wasserbehandlungseinheit nach einem der vorhergehenden Ansprüche, ferner ein erstes Dreiwegeventil (361) umfassend, das mit der ersten Kammer (311) der elektrolytischen Zelle (310) verbunden ist und dazu konfiguriert ist, die Oxidationsmittellösung daran zu hindern, in Kontakt mit der Reduktionsmittellösung zu kommen, um eine alkalische Reinigungslösung (372) mit einem pH-Wert von mindestens etwa 10 bis etwa 13 zu erhalten.

9. Dezentrale Wasserbehandlungseinheit nach einem der vorhergehenden Ansprüche, ferner ein zweites Dreiwegeventil (362) umfassend, das mit der zweiten Kammer (312) der elektrolytischen Zelle (310) verbunden ist und dazu konfiguriert ist, die Reduktionsmittellösung daran zu hindern, in Kontakt mit der Oxidationsmittellösung zu kommen, um eine saure Reinigungslösung (371) mit einem pH-Wert von höchstens etwa 3 und einer Chlorkonzentration von bis zu etwa 3000 ppm zu erhalten.

10. Dezentrale Wasserbehandlungseinheit nach einem der vorhergehenden Ansprüche, wobei das Reinigungsmodul dazu konfiguriert ist, die Oxidationsmittellösung und die Reduktionsmittellösung direkt nach dem Verlassen der elektrolytischen Zelle (310) in Kontakt zu bringen, um eine gemischte Reinigungslösung (370) mit einem pH-Wert von mindestens etwa 10 bis etwa 12 und einer Chlorkonzentration von bis zu etwa 2000 ppm zu erhalten.

11. Dezentrale Wasserbehandlungseinheit nach einem der vorhergehenden Ansprüche, wobei das Reinigungsmodul (411) ferner dazu konfiguriert ist, während des Filtrationszyklus von der dezentralen Wasserbehandlungseinheit (420) abgetrennt zu werden.

12. Verfahren zum Aufbereiten von unbehandeltem Wasser in aufbereitetes Wasser für den menschlichen Verbrauch durch eine dezentrale Wasserbehandlungseinheit nach einem der Ansprüche 1-11, wobei das Verfahren Folgendes umfasst:
- während eines Filtrationszyklus (510) Aufbereiten des unbehandelten Wassers mittels eines Filtrationsmoduls, das mindestens eine Filtrationsmembran umfasst; und
- während eines Erzeugungszyklus (520) Erzeugen einer Reinigungslösung mit vorbestimmter Zusammensetzung aus einer Chlorid-Ausgangslösung mittels eines Reinigungsmoduls, das eine elektrolytische Zelle umfasst; und
- während eines Reinigungszyklus (530) Pumpen der Reinigungslösung mittels des Reinigungsmoduls durch das Filtrationsmodul zum Reinigen der mindestens einen Filtrationsmembran.

## Revendications

1. Unité de traitement de l'eau décentralisée (100) pour purifier de l'eau non traitée (110) en eau purifiée (111) destinée à la consommation humaine, l'unité comprenant :
- un module de filtration (120), comprenant au moins une membrane de filtration (121) configurée pour, lors d'un cycle de filtration, purifier l'eau non traitée ;
- un module de nettoyage (130), comprenant une cellule électrolytique (131) configurée pour, pendant un cycle de génération, générer une solution de nettoyage (132) de composition prédéterminée à partir d'une solution de départ de chlorure (133) ; dans laquelle la solution de nettoyage comprend une solution oxydante ayant un pH acide et/ou une solution réductrice ayant un pH basique ;
- la cellule électrolytique (310) comprenant en outre une anode (321) en communication électrique avec un premier (311) compartiment et une cathode (322) en communication électrique avec un seconde (312) compartiment ; dans laquelle les premier et seconde compartiments sont séparés par une membrane (330) ; et
- le module de nettoyage comprenant en outre une première pompe (341) configurée pour réguler une partie de la solution de départ de chlorure s'écoulant à travers le premier compartiment (311) pour former la solution oxydante ; et/ou le module de nettoyage comprenant en outre une seconde pompe (342) configurée pour réguler une partie de la solution de départ de chlorure s'écoulant à travers le seconde compartiment (312) pour former la solution réductrice ;
dans laquelle le module de nettoyage (130) est en outre configuré pour, pendant un cycle de nettoyage (150), pomper la solution de nettoyage (132) à travers le module de filtration (120) pour nettoyer l'au moins une membrane de filtration (121).

2. Unité de traitement de l'eau décentralisée selon la revendication 1, dans laquelle le module de nettoyage (201) comprend en outre un récipient de nettoyage sur place (210) configuré pour capturer la solution de nettoyage générée (211) pendant le cycle de génération et pour pomper la solution de nettoyage à partir de celui-ci pendant le cycle de nettoyage.

3. Unité de traitement de l'eau décentralisée selon la revendication 1 ou 2, dans laquelle le module de nettoyage (201) comprend en outre au moins un capteur (230) configuré pour mesurer au moins l'un parmi la conductivité de la solution de nettoyage, la température de la solution de nettoyage, le pH de la solution de nettoyage, le potentiel redox de la solution de nettoyage et la concentration en chlore de la solution de nettoyage.

4. Unité de traitement de l'eau décentralisée selon les revendications 2 et 3, dans laquelle le module de nettoyage (201) est en outre configuré, pendant le cycle de nettoyage, pour faire recirculer la solution de nettoyage (211) vers le récipient de nettoyage sur place (210) et au-delà de l'au moins un capteur (230).

5. Unité de traitement de l'eau décentralisée selon la revendication 4, dans laquelle le module de nettoyage (201) comprend en outre une unité de contrôle (270) configurée pour déterminer, pendant le cycle de génération, la composition de la solution de nettoyage (211) et/ou, pendant le cycle de nettoyage, l'épuisement de la solution de nettoyage (211) au moyen des mesures de l'au moins un capteur (230).

6. Unité de traitement de l'eau décentralisée selon la revendication 5, dans laquelle le récipient de nettoyage sur place (210) comprend en outre un drain (212) configuré pour évacuer la solution de nettoyage (211) lorsqu'elle est épuisée ; et/ou dans lequel le récipient de nettoyage sur place (210) est en outre connecté au module de filtration (202) pour rincer le module de nettoyage (201) et/ou le module de filtration (202) avec de l'eau purifiée (261).

7. Unité de traitement de l'eau décentralisée selon l'une quelconque des revendications précédentes, dans laquelle le module de nettoyage (201) comprend en outre un récipient de démarrage (240) configuré pour contenir un sel de chlorure solide (241) qui est sensiblement immergé dans l'eau pour produire une solution saturée de chlorure (242) ; et dans laquelle le module de nettoyage (201) comprend en outre un récipient à sel (250), positionné plus bas par rapport au récipient de départ (240) de telle sorte qu'il puisse être automatiquement rempli par gravité avec un volume défini de solution saturée de chlorure (242), le récipient à sel (250) étant en outre relié au module de filtration (202) pour diluer la solution saturée de chlorure (242) avec de l'eau purifiée pour produire la solution de départ de chlorure (251) ayant une concentration prédéterminée.

8. Unité de traitement de l'eau décentralisée selon l'une quelconque des revendications précédentes, comprenant en outre une première vanne à trois ports (361) connectée au premier compartiment (311) de la cellule électrolytique (310), configurée pour empêcher la solution oxydante de venir en contact avec la solution réductrice pour produire une solution de nettoyage alcaline (372) ayant un pH d'au moins environ 10 à environ 13.

9. Unité de traitement de l'eau décentralisée selon l'une quelconque des revendications précédentes, comprenant en outre une seconde vanne à trois ports (362) reliée au seconde compartiment (312) de la cellule électrolytique (310), configurée pour empêcher la solution réductrice d'entrer en contact avec la solution oxydante pour produire une solution de nettoyage acide (371) ayant un pH d'au plus environ 3 et une concentration en chlore allant jusqu'à environ 3 000 ppm.

10. Unité de traitement de l'eau décentralisée selon l'une quelconque des revendications précédentes, dans laquelle le module de nettoyage est configuré pour mettre la solution oxydante et la solution réductrice en contact directement après avoir quitté la cellule électrolytique (310) pour produire une solution de nettoyage mixte (370) ayant un pH d'au moins environ 10 à environ 12 et une concentration de chlore allant jusqu'à environ 2 000 ppm.

11. Unité de traitement de l'eau décentralisée selon l'une quelconque des revendications précédentes, dans laquelle le module de nettoyage (411) est en outre configuré pour être détaché de l'unité de traitement de l'eau décentralisée (420) pendant le cycle de filtration.

12. Procédé de purification d'eau non traitée en eau purifiée destinée à la consommation humaine, par une unité de traitement de l'eau décentralisée selon l'une quelconque des revendications 1 à 11, le procédé comprenant :
- pendant un cycle de filtration (510), la purification de l'eau non traitée au moyen d'un module de filtration, comprenant au moins une membrane de filtration ; et
- pendant un cycle de génération (520), la génération d'une solution de nettoyage de composition prédéterminée à partir d'une solution de départ de chlorure, au moyen d'un module de nettoyage comprenant une cellule électrolytique ; et
- pendant un cycle de nettoyage (530), le pompage de la solution de nettoyage, au moyen du module de nettoyage, à travers le module de filtration pour nettoyer l'au moins une membrane de filtration.
